# EUROPEAN PATENT APPLICATION

(11) **EP 4 529 191 A1**
(43) Date of publication of application: **26.03.2025**
(21) Application number: 23887925.8
(22) Date of filing: 03.11.2023
(51) Int. Cl.: H04N 21/431

(54) **LIVESTREAM PICTURE PROCESSING METHOD AND APPARATUS, DEVICE AND STORAGE MEDIUM**

(30) Priority: 07.11.2022 CN 202211387325
(71) Applicant: Beijing Zitiao Network Technology Co., Ltd., Beijing 100190 (CN)
(72) Inventor: WANG, Wei, Beijing 100028 (CN); LI, Zhen, Beijing 100028 (CN); WANG, Bin, Beijing 100028 (CN)
(74) Representative: Williams, Michael David
(86) International application number: PCT/CN2023/129695
(87) International publication number: WO 2024/099235

(57) **Abstract**

Provided by the present disclosure are a livestream picture processing method and apparatus, a device and a storage medium. The method comprises : first, a viewing terminal pulling a livestream merged picture and picture position information corresponding to the livestream merged picture from a livestream streaming media server, the livestream merged picture being obtained on the basis of merging at least two livestream pictures, and the picture position information being used to identify the respective positions of the at least two livestream pictures in the livestream merged picture; then, separating each of at least two livestream pictures from the livestream merged picture on the basis of the picture position information; further, displaying the at least two livestream pictures on the basis of a preset livestream picture display layout. As can be seen, according to an embodiment of the present disclosure, multiple livestream pictures may be separated from a pulled-down livestream merged picture, and the livestream pictures are each displayed on the basis of a preset livestream picture display layout, so that the video livestream-related functions are enriched, and the viewing experience of the user is improved.

## Description

### CROSS-REFERENCE TO RELATED APPLICATIONS

This application is based on and claims the benefit of priority to the Chinese patent application No. 202211387325.0 filed on November 7, 2022, which is hereby incorporated by reference in its entirety into the present application.

### TECHNICAL FIELD

The present disclosure relates to the technical field of data processing, and in particular, to a live-stream display processing method and apparatus, device, and a storage medium.

### BACKGROUND

With the rapid development of the Internet, a video live streaming form is used in more and more scenes, such as game live streaming, event live streaming, shopping live streaming.

Therefore, how to enrich related functions of the video live streaming, thereby improving the viewing experience of users, is a technical problem to be solved urgently at present.

### SUMMARY

In order to solve the above technical problem, an embodiment of the present disclosure provides a live-stream display processing method.

In a first aspect, the present disclosure provides a live-stream display processing method, comprising:
pulling a live-stream merged display and image position information corresponding to the live-stream merged display from a live streaming media server; wherein, the live-stream merged display is obtained on the basis of merging of at least two live-stream displays, and the image position information is configured for identifying respective positions of the at least two live-stream displays in the live-stream merged display;
separating the at least two live-stream displays from the live-stream merged display respectively, based on the image position information; and
displaying the at least two live-stream displays based on a preset live-stream display layout.

In an optional implementation, the at least two live-stream displays comprise a first live-stream display and a second live-stream display; the displaying the at least two live-stream displays based on the preset live-stream display layout, comprises:
displaying the first live-stream display in a first area indicated by the preset live-stream display layout, and displaying the second live-stream display in a second area indicated by the preset live-stream display layout; wherein there is no overlap between the first area and the second area.

In an optional implementation, the first live-stream display is a live-stream display acquired by a streamer side in real time by using a local camera, and the second live-stream display is a live-stream display pulled by the streamer side in real time.

In an optional implementation, the displaying the at least two live-stream displays based on the preset live-stream display layout, comprises:
drawing the at least two live-stream displays on different canvases respectively; and
displaying the canvases drawn with the live-stream displays based on the preset live-stream display layout.

In an optional implementation, image coordinate information corresponding to the live-stream merged display is carried in SEI information.

In a second aspect, the present disclosure provides a live-stream display processing method, comprising:
merging at least two live-stream displays to obtain a live-stream merged display;
obtaining respective position information of the at least two live-stream displays on the live-stream merged display, as image position information corresponding to the live-stream merged display;
pushing the live-stream merged display and the image position information corresponding to the live-stream merged display to a live streaming media server; wherein, the image position information is configured for separating the at least two live-stream displays from the live-stream merged display.

In an optional implementation, the merging the at least two live-stream displays to obtain the live-stream merged display, comprises:
acquiring a first live-stream display in real time by using a local camera, and pulling a second live-stream display from a preset live server in real time; and
merging the first live-stream display and the second live-stream display to obtain the live-stream merged display.

In an optional implementation, the merging the at least two live-stream displays to obtain the live-stream merged display, comprises:
merging the at least two live-stream displays by using a target merging template to obtain the live-stream merged display; wherein, the target merging template is defined with the respective position information of the at least two live-stream displays on the live-stream merged display;
correspondingly, the obtaining the respective position information of the at least two live-stream displays on the live-stream merged display, as the image position information corresponding to the live-stream merged display, comprises:
   obtaining the respective position information of the at least two live-stream displays on the live-stream merged display from the target merging template, as the image position information corresponding to the live-stream merged display.

In a third aspect, the present disclosure provides a live-stream display processing system, comprising a streamer side and a viewer side; wherein,
the streamer side is configured to merge at least two live-stream displays to obtain a live-stream merged display, obtaining image position information corresponding to the live-stream merged display, and push the live-stream merged display and the image position information corresponding to the live-stream merged display to a live streaming media server; wherein, the image position information is configured for representing respective positions of the at least two live-stream displays on the live-stream merged display; and
the viewer side is configured to pull the live-stream merged display and the image position information corresponding to the live-stream merged display from the live streaming media server, separate the at least two live-stream displays from the live-stream merged display respectively, based on the image position information, and display the at least two live-stream displays based on a preset live-stream display layout.

In an optional implementation, the streamer side is specifically configured to acquire a first live-stream display in real time by using a local camera, pull a second live-stream display from a preset live server in real time, and merge the first live-stream display and the second live-stream display to obtain the live-stream merged display.

In a fourth aspect, the present disclosure provides a live-stream display processing apparatus, comprising:
a pulling module configured to pull a live-stream merged display and image position information corresponding to the live-stream merged display from a live streaming media server; wherein, the live-stream merged display is obtained on the basis of merging of at least two live-stream displays, and the image position information is configured for identifying respective positions of the at least two live-stream displays in the live-stream merged display;
a separating module configured to separate the at least two live-stream displays from the live-stream merged display respectively, based on the image position information; and
a display module configured to display the at least two live-stream displays based on a preset live-stream display layout.

In a fifth aspect, the present disclosure provides a live-stream display processing apparatus, comprising:
a merging module configured to merge at least two live-stream displays to obtain a live-stream merged display;
an obtaining module configured to obtain respective position information of the at least two live-stream displays on the live-stream merged display, as image position information corresponding to the live-stream merged display;
a pushing module configured to push the live-stream merged display and the image position information corresponding to the live-stream merged display to a live streaming media server; wherein, the image position information is configured for separating the at least two live-stream displays from the live-stream merged display.

In a sixth aspect, the present disclosure provides a computer-readable storage medium having stored thereon instructions which, when run on a terminal device, cause the terminal device to implement the method described above.

In a seventh aspect, the present disclosure provides a live-stream display processing device, comprising: a memory, a processor, and a computer program stored on the memory and executable on the processor, the processor implementing the method described above when executing the computer program.

In an eighth aspect, the present disclosure provides a computer program product comprising a computer program/instructions which, when executed by a processor, implement the method described above.

Compared with the prior art, the technical solution provided by the embodiment of the present disclosure has at least the following advantages:

The embodiment of the present disclosure provides a live-stream display processing method in which, first, a viewer side pulls a live-stream merged display and image position information corresponding to the live-stream merged display from a live streaming media server, wherein the live-stream merged display is obtained based on merging of at least two live-stream displays, and the image position information is configured for identifying respective positions of the at least two live-stream displays in the live-stream merged display, then, the at least two live-stream displays are separated from the live-stream merged display respectively, based on the image position information, and then, the at least two live-stream displays are displayed based on a preset live-stream display layout. Therefore, the embodiment of the present disclosure can separate a plurality of live-stream displays from the pulled live-stream merged display, and display each live-stream display based on the preset live-stream display layout, enriching related functions of the video live streaming, and improving the viewing experience of users.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the disclosure.

In order to more clearly illustrate technical solutions in the embodiments of the present disclosure or the prior art, the drawings to be used in description of the embodiments or the prior art will be briefly described below, and it is obvious for those skilled in the art that other drawings can be obtained according to these drawings without creative labor.
Fig. 1 is a schematic structural diagram of a live-stream display processing system according to an embodiment of the present disclosure;
Fig. 2 is a flow diagram of a live-stream display processing method according to an embodiment of the present disclosure;
Fig. 3 is a schematic diagram of a live-stream merged display according to an embodiment of the present disclosure;
Fig. 4 is a schematic diagram of a live-stream display display according to an embodiment of the present disclosure;
Fig. 5 is a flow diagram of another live-stream display processing method according to an embodiment of the present disclosure;
Fig. 6 is a schematic structural diagram of a live-stream display processing apparatus according to an embodiment of the present disclosure;
Fig. 7 is a schematic structural diagram of another live-stream display processing apparatus according to an embodiment of the present disclosure;
Fig. 8 is a schematic structural diagram of a live-stream display processing device according to an embodiment of the present disclosure.

### DETAILED DESCRIPTION

In order that the above objectives, features and advantages of the present disclosure may be more clearly understood, aspects of the present disclosure will be further described below. It should be noted that, in the case of no conflict, the embodiments of the present disclosure and features in the embodiments may be combined with each other.

In the following description, numerous specific details are set forth in order to provide a thorough understanding of the present disclosure, but the present disclosure may be practiced otherwise than as described herein; it is clear that the embodiments disclosed in the specification are only a few embodiments of the present disclosure, but not all embodiments.

With the rapid development of the Internet, a video live streaming form is used in more and more scenes, such as game live streaming, event live streaming, shopping live streaming.

Therefore, how to enrich related functions of the video live streaming, thereby improving the viewing experience of the user, is a technical problem to be solved urgently at present.

In order to enrich related functions of the video live streaming and improve the viewing experience of the user, an embodiment of the disclosure provides a live-stream display processing method in which, firstly, a viewer side pulls a live-stream merged display and image position information corresponding to the live-stream merged display from a live streaming media server, wherein the live-stream merged display is obtained based on merging of at least two live-stream displays, and the image position information is configured for identifying respective positions of the at least two live-stream displays in the live-stream merged display, then, the at least two live-stream displays are separated from the live-stream merged display respectively, based on the image position information, and further, the at least two live-stream displays are displayed based on a preset live-stream display layout. Therefore, the embodiment of the present disclosure can separate a plurality of live-stream displays from the pulled live-stream merged display, and display each live-stream display based on the preset live-stream display layout, enriching the related functions of the video live streaming, and improving the viewing experience of the user.

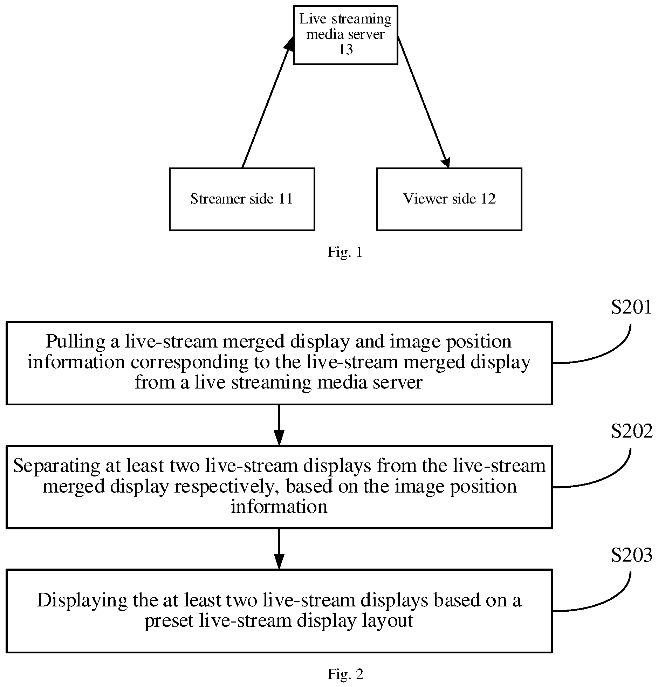

Based on this, an embodiment of the present disclosure provides a live-stream display processing system, and referring to Fig. 1, which is a schematic structural diagram of the live-stream display processing system according to the embodiment of the present disclosure, as shown in Fig. 1, the live-stream display processing system comprises a streamer side 11 and a viewer side 12, wherein the streamer side 11 may interact with a live streaming media server 13, and the streamer side 11 may be a terminal device on an anchor side; the viewer side 12 may also interact with the live streaming media server 13, and the viewer side 12 may be a terminal device on a viewer side.

In the embodiment of the present disclosure, the streamer side 11 is configured to merge at least two live-stream displays to obtain a live-stream merged display, obtain image position information corresponding to the live-stream merged display, and push the live-stream merged display and the image position information corresponding to the live-stream merged display to the live streaming media server 13; wherein, the image position information is configured for indicating respective positions of the at least two live-stream displays on the live-stream merged display.

The viewer side 12 is configured to pull the live-stream merged display and the image position information corresponding to the live-stream merged display from the live streaming media server 13, separate the at least two live-stream displays from the live-stream merged display respectively, based on the image position information, and display the at least two live-stream displays based on a preset live-stream display layout.

In an optional implementation, the streamer side 11 is specifically configured to acquire a first live-stream display in real time by using a local camera, pull a second live-stream display from a preset live server in real time, and merge the first live-stream display and the second live-stream display to obtain the live-stream merged display.

In the live-stream display processing system according to the embodiment of the present disclosure, the streamer side 11 can push the live-stream merged display and the image position information corresponding to the live-stream merged display to the live streaming media server 13, and the viewer side 12 can separate the at least two live-stream displays from the live-stream merged display based on the image position information after pulling the live-stream merged display from the live streaming media server 13, and display the at least two live-stream displays based on the preset live-stream display layout. It can be seen that, the viewer side 12 can separate a plurality of live-stream displays from the live-stream merged display, and then display the layout of the plurality of live-stream displays based on the preset live-stream display layout, which may be different from the display layout of the plurality of live-stream displays at the streamer side 11, improving the flexibility of the display of the live-stream merged display, and improving the viewing experience of the user.

Based on the above live-stream display processing system, an embodiment of the present disclosure provides a live-stream display processing method, and referring to Fig. 2, which is a flow diagram of a live-stream display processing method according to an embodiment of the present disclosure, as shown in Fig. 2, the method is applied to a viewer side and comprises:
S201: pulling a live-stream merged display and image position information corresponding to the live-stream merged display from a live streaming media server.

The live-stream merged display is obtained based on merging of at least two live-stream displays, and the image position information is configured for identifying respective positions of the at least two live-stream displays in the live-stream merged display.

The live-stream display processing method according to the embodiment of the present disclosure is applied to a viewer side, wherein the viewer side can be a client of a viewer side, for example, a smart phone client deployed at the viewer side, a tablet computer client deployed at the viewer side, and the like. The viewer side can interact with the live streaming media server, and the viewer side can pull live-stream displays from the live streaming media server.

In the embodiment of the present disclosure, the viewer side can pull the live-stream merged display from the live streaming media server, wherein the live-stream merged display at least comprises two live-stream displays, and the streamer side can obtain the live-stream merged display by merging of the at least two live-stream displays. For example, the live-stream displays may include a game anchor display, an event commentator display, a game live-stream display, an event live-stream display, and the like, and by merging at least two live-stream displays, the streamer side can obtain a live-stream merged display including a game anchor display A and a game live-stream display a; or a live-stream merged display including an event commentator display A, an event commentator display B and an event live-stream display B; and so on.

In the embodiment of the present disclosure, the viewer side may further obtain, from the live streaming media server, image position information corresponding to the live-stream merged display, wherein, the image position information is configured for identifying respective positions of the at least two live-stream displays in the live-stream merged display, and specifically, the image position information may be image coordinate information.

In an optional implementation, the image coordinate information corresponding to the live-stream merged display is carried in SEI information.

In the embodiment of the present disclosure, the image coordinate information corresponding to the live-stream merged display obtained by the viewer side from the live streaming media server may be carried in Supplemental Enhancement Information (SEI), wherein, the SEI information may identify image coordinate information of each live-stream display in the live-stream merged display.

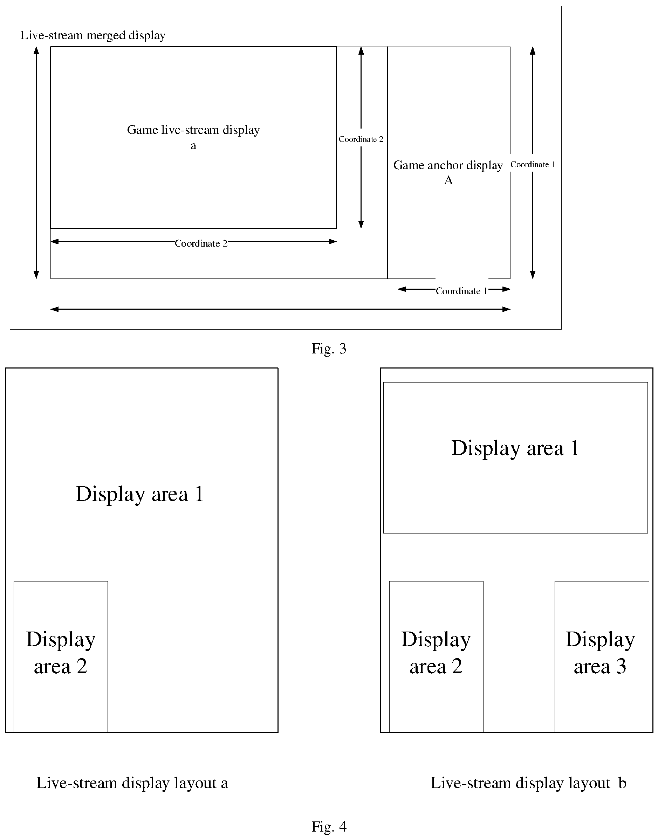

For example, the live-stream merged display pulled by the viewer side from the live streaming server includes the game anchor display A and the game live-stream display a, and the SEI information. Referring to Fig. 3, it is a schematic diagram of a live-stream merged display according to an embodiment of the present disclosure, where it can be identified based on the SEI information that, coordinate information of the game anchor display A in the live-stream merged display is coordinate 1, and coordinate information of the game live-stream display a in the live-stream merged display is coordinate 2, so that respective positions of the game anchor display A and the game live-stream display a in the live-stream merged display can be determined.

S202: separating the at least two live-stream displays from the live-stream merged display respectively, based on the image position information.

In the embodiment of the present disclosure, based on the image position information corresponding to the live-stream merged display pulled in the S201, respective positions of the live-stream displays included in the live-stream merged display in the live-stream merged display are determined, and then, the live-stream displays can be separated from the live-stream merged display. For example, assuming that the pulled live-stream merged display is obtained based on merging of two live-stream displays, based on the image position information, the two live-stream displays can be separated from the live-stream merged display; assuming that the pulled live-stream merged display is obtained based on merging of three live-stream displays, based on the image position information, the three live-stream displays can be separated from the live-stream merged display; and so on.

Referring to Fig. 3, based on the coordinates 1 and 2, the respective positions of the game anchor display A and the game live-stream display a in the live-stream merged display are determined, and then the game anchor display A and the game live-stream display a are separated from the live-stream merged display, respectively.

S203: displaying the at least two live-stream displays based on a preset live-stream display layout.

In the embodiment of the present disclosure, the viewer side includes one or more preset live-stream display layouts, and based on the preset live-stream display layout, the at least two live-stream displays can be displayed according to preset positions. The preset live-stream display layout can be set based on user preference of the viewer side, equipment conditions of the viewer side and other factors, and there may be an overlap or not between areas where the live-stream displays in the preset live-stream display layout are located, and a specific style and number of the preset live-stream display layout is not limited in the embodiment of the present disclosure.

For example, as shown in Fig. 4, which is a schematic diagram of a live-stream display display according to an embodiment of the present disclosure, two preset live-stream display layouts are included, wherein a live-stream display layout a includes two live-stream display display areas, and there is an overlap between areas where the two live-stream displays are respectively located; and a live-stream display layout b includes three live-stream display display areas, and there is no overlap between areas where the three live-stream displays are respectively located.

In an optional implementation, first, the at least two live-stream displays are respectively drawn on different canvases, and then the canvases drawn with the live-stream displays are displayed based on the preset live-stream display layout.

In the embodiment of the present disclosure, the at least two live-stream displays separated from the live-stream merged display based on the above S202 can be respectively drawn on different canvases, and by displaying the canvases, the live-stream displays on the canvases can be displayed.

For example, assuming that three live-stream displays are separated from the live-stream merged display, first, the three live-stream displays are respectively drawn on different canvases, specifically, the game anchor display A1 is drawn on canvas 1, the game anchor display A2 is drawn on canvas 2, and the game live-stream display a is drawn on canvas 3, and further, based on a preset live-stream display layout, with reference to the live-stream display layout b in Fig. 4, the canvas 1 is displayed on a display area 2, the canvas 2 is displayed on a display area 3, the canvas 3 is displayed on a display area 1, and the three live-stream displays (the game anchor display A1, the game anchor display A2, and the game live-stream display a) are displayed.

In the embodiment of the present disclosure, the separated live-stream displays are respectively drawn on different canvases, so that a plurality of live-stream displays are not interfered with each other when being displayed, improving the viewing experience of the user.

In an optional implementation, the at least two live-stream displays include a first live-stream display and a second live-stream display, the first live-stream display is displayed in a first area indicated by the preset live-stream display layout, and the second live-stream display is displayed in a second area indicated by the preset live-stream display layout, and the at least two live-stream displays are displayed, wherein there is no overlap between the first area and the second area.

In the embodiment of the present disclosure, based on the preset live-stream display layout, the first live-stream display and the second live-stream display can be respectively displayed in two areas without an overlap, so that an effect of no mutual shielding between the at least two live-stream displays can be achieved.

For example, assuming that in a game live commentary scene, a viewer side user wants the live-stream display of the game anchor not to shield the game live-stream display in order to improve the viewing experience, the game anchor display may be displayed in the display area 2 and the game live-stream display may be displayed in the display area 1 based on the live-stream display layout b shown in Fig. 4.

In an optional implementation, the first live-stream display is a live-stream display acquired by the streamer side in real time by using a local camera, and the second live-stream display is a live-stream display pulled by the streamer side in real time.

In the embodiment of the present disclosure, the first live-stream display may be a live-stream display acquired by the streamer side in real time by using a local camera, for example, a game anchor display, an event anchor display, or the like, and the second live-stream display may be a live-stream display pulled by the streamer side in real time, for example, a game live-stream display, an event live-stream display, or the like that is pulled by the streamer side from a preset live server in real time.

In the embodiment of the present disclosure, based on a choice of the viewer side for the preset live-stream display layout, the at least two live-stream displays are respectively displayed in areas without an overlap therebetween, so that the problem that the live-stream display cannot be completely displayed as being shielded by the anchor display is solved, thereby improving the viewing experience of the user.

In the live-stream display processing method according to the embodiment of the present disclosure, first, a viewer side pulls a live-stream merged display and image position information corresponding to the live-stream merged display from a live streaming media server, wherein the live-stream merged display is obtained based on merging of at least two live-stream displays, and the image position information is configured for identifying respective positions of the at least two live-stream displays in the live-stream merged display, then, the at least two live-stream displays are separated from the live-stream merged display respectively, based on the image position information, and then, the at least two live-stream displays are displayed based on a preset live-stream display layout. Therefore, the embodiment of the present disclosure can separate a plurality of live-stream displays from the pulled live-stream merged display, and display each live-stream display based on the preset live-stream display layout, enriching the related functions of the video live streaming, and improving the viewing experience of the user.

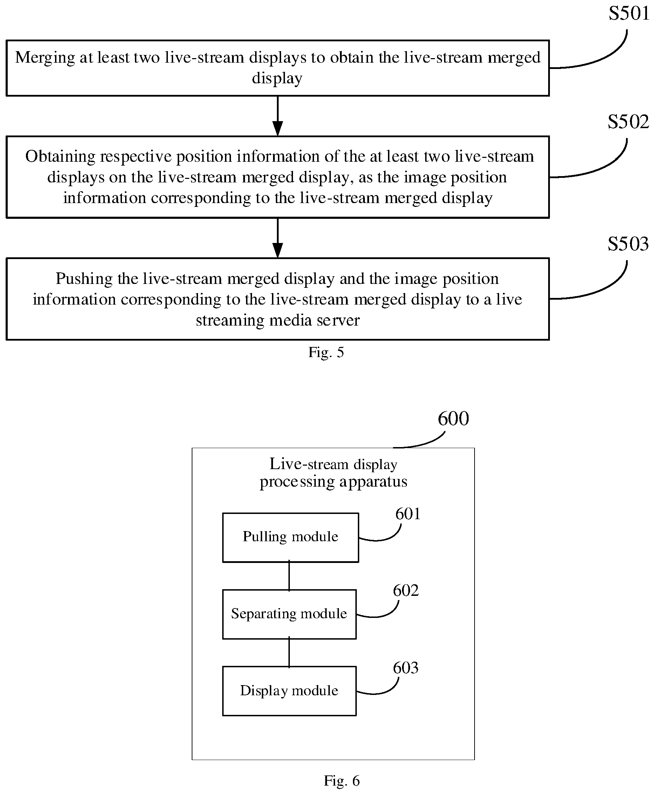

Based on the above live-stream display processing system, another live-stream display processing method is provided in an embodiment of the present disclosure, and referring to Fig. 5, which is a flow diagram of another live-stream display processing method according to the embodiment of the present disclosure, as shown in Fig. 5, the method is applied to a streamer side and comprises:
S501: merging at least two live-stream displays to obtain a live-stream merged display.

The live-stream display processing method according to the embodiment of the present disclosure is applied to a streamer side, wherein the streamer side can be a client of an anchor side, for example, a smart phone client deployed on the anchor side, a tablet computer client deployed on the anchor side, and the like. The streamer side can interact with the live streaming media server, and the streamer side can push live-stream displays to the live streaming media server.

In the embodiment of the present disclosure, the streamer side merges at least two live-stream displays to obtain a live-stream merged display, wherein the live-stream display can be a local live-stream display at the streamer side or a live-stream display pulled in real time from other live servers. For example, the streamer side merges the game anchor display A and the game live-stream display a to obtain the live-stream merged display as shown in Fig. 3.

In an optional implementation, first, the streamer side acquires a first live-stream display in real time by using a local camera, and pulls a second live-stream display from a preset live server in real time, and then merges the first live-stream display and the second live-stream display to obtain a live-stream merged display.

In the embodiment of the present disclosure, assuming that the streamer side is a game anchor end, then the game anchor end acquires a game anchor display in real time using a local camera as the first live-stream display, and pulls a game live-stream display from a preset live server in real time as the second live-stream display, and further, the game anchor end can merge the first live-stream display and the second live-stream display to obtain a live-stream merged display of the game anchor providing commentary on a game; assuming that the streamer side is an event anchor end, then the event anchor end acquires an event anchor display in real time by using a local camera as the first live-stream display, and pulls an event live-stream display in real time from a preset live server as the second live-stream display, and further, the event anchor end can merge the first live-stream display and the second live-stream display to obtain a live-stream merged display of the event anchor providing commentary on an event; and so on.

In an optional implementation, the at least two live-stream displays are merged by using a target merging template to obtain the live-stream merged display, wherein respective position information of the at least two live-stream displays on the live-stream merged display is defined in the target merging template.

In the embodiment of the present disclosure, the streamer side comprises one or more merging templates, in which respective position information of each live-stream display on the live-stream merged display is included, wherein the position information of the live-stream display can be represented by using coordinate information of the live-stream display, and the coordinate information of the live-stream display can be carried in SEI information. The merging template can be preset based on factors such as individual habits of the anchor of the streamer side, equipment conditions of the client at the anchor side and the like, and a specific style and number of the merging template is not limited in the embodiment of the present disclosure.

In the embodiment of the present disclosure, first, a target merging template is determined from one or more merging templates, and then, by using the target merging template, live-stream displays can be merged according to their respective position information, so as to obtain the live-stream merged display. For example, referring to Fig. 3, the game anchor display A and the game live-stream display a are merged using one target merging template to obtain a live-stream merged display.

S502: obtaining respective position information of the at least two live-stream displays on the live-stream merged display, as image position information corresponding to the live-stream merged display.

In the embodiment of the present disclosure, since the target merging template defines the respective position information of the at least two live-stream displays on the live-stream merged display, the streamer side can obtain the respective position information of the at least two live-stream displays on the live-stream merged display from the target merging template, as the image position information corresponding to the live-stream merged display.

Referring to Fig. 3, the streamer side can obtain position information (coordinate 1) of the game anchor display A on the live-stream merged display and position information (coordinate 2) of the game live-stream display a on the live-stream merged display from the target merging template, and thus, image position information corresponding to the live-stream merged display shown in Fig. 3 can include the coordinate 1 and the coordinate 2.

S503: pushing the live-stream merged display and the image position information corresponding to the live-stream merged display to a live streaming media server, wherein, the image position information is configured for separating the at least two live-stream displays from the live-stream merged display.

In the embodiment of the present disclosure, the streamer side may push the live-stream merged display obtained in the above S501 and the image position information corresponding to the live-stream merged display obtained in the above S502 to the live streaming media server, wherein, the image position information may be configured for the viewer side to separate the at least two live-stream displays from the live-stream merged display.

In the live-stream display processing method according to the embodiment of the present disclosure, first, a streamer side merges at least two live-stream displays to obtain a live-stream merged display, then, respective position information of the at least two live-stream displays on the live-stream merged display is obtained as image position information corresponding to the live-stream merged display, and further, the live-stream merged display and the image position information corresponding to the live-stream merged display are pushed to a live streaming media server, wherein, the image position information is configured for a viewer side to separate the at least two live-stream displays from the live-stream merged display. Therefore, in the embodiment of the present disclosure, the streamer side can not only push the live-stream merged display, but also push the respective position information of each live-stream display on the live-stream merged display to the live streaming media server, so that the viewer side can separate each live-stream display from the live-stream merged display.

Based on the foregoing method embodiment, the present disclosure further provides a live-stream display processing apparatus, and referring to Fig. 6, which is a schematic structural diagram of a live-stream display processing apparatus according to an embodiment of the present disclosure, the apparatus comprises:
a pulling module 601 configured to pull a live-stream merged display and image position information corresponding to the live-stream merged display from a live streaming media server; wherein, the live-stream merged display is obtained on the basis of merging of at least two live-stream displays, and the image position information is configured for identifying respective positions of the at least two live-stream displays in the live-stream merged display;
a separating module 602 configured to separate the at least two live-stream displays from the live-stream merged display respectively, based on the image position information; and
a display module 603 configured to display the at least two live-stream displays based on a preset live-stream display layout.

In an optional implementation, the at least two live-stream displays comprise a first live-stream display and a second live-stream display; the display module 603 comprises:
a first display sub-module configured to, display the first live-stream display in a first area indicated by the preset live-stream display layout, and display the second live-stream display in a second area indicated by the preset live-stream display layout; wherein, there is no overlap between the first area and the second area.

In an optional implementation, the first live-stream display is a live-stream display acquired by a streamer side in real time by using a local camera, and the second live-stream display is a live-stream display pulled by the streamer side in real time.

In an optional implementation, the display module 603 comprises:
a drawing sub-module configured to, draw the at least two live-stream displays on different canvases respectively; and
a second display sub-module configured to, display the canvases drawn with the live-stream displays based on the preset live-stream display layout.

In an optional implementation, image coordinate information corresponding to the live-stream merged display is carried in SEI information.

In the live-stream display processing apparatus according to the embodiment of the present disclosure, first, a viewer side pulls a live-stream merged display and image position information corresponding to the live-stream merged display from a live streaming media server, wherein the live-stream merged display is obtained based on merging of at least two live-stream displays, and the image position information is configured for identifying respective positions of the at least two live-stream displays in the live-stream merged display, then, the at least two live-stream displays are separated from the live-stream merged display respectively, based on the image position information, and further, the at least two live-stream displays are displayed based on a preset live-stream display layout. Therefore, the embodiment of the present disclosure can separate a plurality of live-stream displays from the pulled live-stream merged display, and display each live-stream display based on the preset live-stream display layout, enriching the related functions of the video live streaming, and improving the viewing experience of the user.

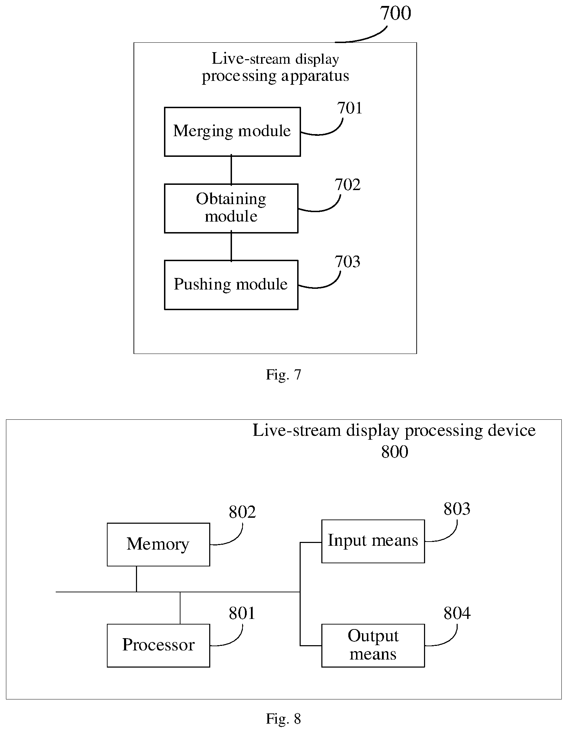

Based on the foregoing method embodiment, the present disclosure further provides a live-stream display processing apparatus, and referring to Fig. 7, which is a schematic structural diagram of another live-stream display processing apparatus according to the embodiment of the present disclosure, the apparatus comprises:
a merging module 701 configured to merge at least two live-stream displays to obtain a live-stream merged display;
an obtaining module 702 configured to obtain respective position information of the at least two live-stream displays on the live-stream merged display, as image position information corresponding to the live-stream merged display;
a pushing module 703 configured to push the live-stream merged display and the image position information corresponding to the live-stream merged display to a live streaming media server; wherein, the image position information is configured for separating the at least two live-stream displays from the live-stream merged display.

In an optional implementation, the merging module 701 comprises:
an acquiring sub-module configured to, acquire a first live-stream display in real time by using a local camera, and pull a second live-stream display from a preset live server in real time; and
a first merging sub-module configured to, merge the first live-stream display and the second live-stream display to obtain the live-stream merged display.

In an optional implementation, the merging module 701 comprises:
a second merging sub-module configured to, merge the at least two live-stream displays by using a target merging template to obtain the live-stream merged display; wherein, the target merging template is defined with the respective position information of the at least two live-stream displays on the live-stream merged display;
correspondingly, the obtaining module 702 comprises:
   an obtaining sub-module configured to, obtain the respective position information of the at least two live-stream displays on the live-stream merged display from the target merging template, as the image position information corresponding to the live-stream merged display.

In the live-stream display processing apparatus according to the embodiment of the present disclosure, first, a streamer side merges at least two live-stream displays to obtain a live-stream merged display, then, respective position information of the at least two live-stream displays on the live-stream merged display is obtained as image position information corresponding to the live-stream merged display, and further, the live-stream merged display and the image position information corresponding to the live-stream merged display are pushed to a live streaming media server, wherein, the image position information is configured for a viewer side to separate the at least two live-stream displays from the live-stream merged display. Therefore, in the embodiment of the present disclosure, the streamer side can not only push the live-stream merged display, but also push the respective position information of each live-stream display on the live-stream merged display to the live streaming media server, so that the viewer side can separate each live-stream display from the live-stream merged display.

In addition to the above method and the apparatus, an embodiment of the present disclosure further provides a computer-readable storage medium having stored thereon instructions which, when run on a terminal device, cause the terminal device to implement the live-stream display processing method described in the embodiment of the present disclosure.

An embodiment of the present disclosure further provides a computer program product comprising computer programs/instructions which, when executed by a processor, implement the live-stream display processing method described in the embodiment of the present disclosure.

In addition, an embodiment of the present disclosure further provides a live-stream display processing device, as shown in Fig. 8, comprising: a processor 801, a memory 802, an input means 803, and an output means 804. The number of the processor 801 in the live-stream display processing device may be one or more, and one processor is illustrated in Fig. 8 as an example. In some embodiments of the present disclosure, the processor 801, the memory 802, the input means 803 and the output means 804 may be connected via a bus or other means, wherein the connection via the bus is exemplified in Fig. 8.

The memory 802 may be configured to store software programs and modules, and the processor 801 executes various functional applications and data processing of the live-stream display processing device by operating the software programs and modules stored in the memory 802. The memory 802 may mainly include a program storage area and a data storage area, wherein the program storage area may store an operating system, an application required for at least one function, and the like. Further, the memory 802 may include a high speed random access memory and may also include a non-volatile memory, such as at least one magnetic disk storage device, flash memory device, or other volatile solid state storage devices. The input means 803 may be configured to receive input numeric or character information and to generate signal inputs relating to user settings and function controls of the live-stream display processing device.

Specifically, in this embodiment, the processor 801 loads an executable file corresponding to a process of one or more applications into the memory 802 according to the following instructions, and the processor 801 runs the application stored in the memory 802, thereby implementing various functions of the above live-stream display processing device.

It should be noted that, relational terms such as "first" and "second", herein, are only configured for distinguishing one entity or operation from another entity or operation without necessarily requiring or implying any such actual relation or order between these entities or operations. Moreover, the term "comprise", "include", or any other variation thereof, is intended to encompass a non-exclusive inclusion, such that a process, method, article, or device comprising a list of elements not only includes those elements but also includes other elements not expressly listed, or also includes elements inherent to such a process, method, article, or device. Without more limitations, an element defined by a statement "comprising a ..." does not exclude the presence of another identical element in a process, method, article, or device that includes the element.
The above is only the specific implementations of the present disclosure, which enable those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to these embodiments described herein, but conform to the widest scope consistent with the principles and novel features disclosed herein.

## Claims

1. A live-stream display processing method, comprising:
pulling a live-stream merged display and image position information corresponding to the live-stream merged display from a live streaming media server; wherein, the live-stream merged display is obtained on the basis of merging of at least two live-stream displays, and the image position information is configured for identifying respective positions of the at least two live-stream displays in the live-stream merged display;
separating the at least two live-stream displays from the live-stream merged display respectively, based on the image position information; and
displaying the at least two live-stream displays based on a preset live-stream display layout.

2. The method according to claim **1,** wherein, the at least two live-stream displays comprise a first live-stream display and a second live-stream display; the displaying the at least two live-stream displays based on the preset live-stream display layout, comprises:
displaying the first live-stream display in a first area indicated by the preset live-stream display layout, and displaying the second live-stream display in a second area indicated by the preset live-stream display layout; wherein there is no overlap between the first area and the second area.

3. The method according to claim 2, wherein, the first live-stream display is a live-stream display acquired by a streamer side in real time by using a local camera, and the second live-stream display is a live-stream display pulled by the streamer side in real time.

4. The method according to claim **1,** wherein, the displaying the at least two live-stream displays based on the preset live-stream display layout, comprises:
drawing the at least two live-stream displays on different canvases respectively; and
displaying the canvases drawn with the live-stream displays based on the preset live-stream display layout.

5. The method according to claim 1, wherein, image coordinate information corresponding to the live-stream merged display is carried in SEI information.

6. A live-stream display processing method, comprising:
merging at least two live-stream displays to obtain a live-stream merged display;
obtaining respective position information of the at least two live-stream displays on the live-stream merged display, as image position information corresponding to the live-stream merged display;
pushing the live-stream merged display and the image position information corresponding to the live-stream merged display to a live streaming media server; wherein, the image position information is configured for separating the at least two live-stream displays from the live-stream merged display.

7. The method according to claim 6, wherein, the merging the at least two live-stream displays to obtain the live-stream merged display, comprises:
acquiring a first live-stream display in real time by using a local camera, and pulling a second live-stream display from a preset live server in real time; and
merging the first live-stream display and the second live-stream display to obtain the live-stream merged display.

8. The method according to claim 6, wherein, the merging the at least two live-stream displays to obtain the live-stream merged display, comprises:
merging the at least two live-stream displays by using a target merging template to obtain the live-stream merged display; wherein, the target merging template is defined with the respective position information of the at least two live-stream displays on the live-stream merged display;
correspondingly, the obtaining the respective position information of the at least two live-stream displays on the live-stream merged display, as the image position information corresponding to the live-stream merged display, comprises:
obtaining the respective position information of the at least two live-stream displays on the live-stream merged display from the target merging template, as the image position information corresponding to the live-stream merged display.

9. A live-stream display processing system, comprising a streamer side and a viewer side; wherein,
the streamer side is configured to merge at least two live-stream displays to obtain a live-stream merged display, obtaining image position information corresponding to the live-stream merged display, and push the live-stream merged display and the image position information corresponding to the live-stream merged display to a live streaming media server; wherein, the image position information is configured for representing respective positions of the at least two live-stream displays on the live-stream merged display; and
the viewer side is configured to pull the live-stream merged display and the image position information corresponding to the live-stream merged display from the live streaming media server, separate the at least two live-stream displays from the live-stream merged display respectively, based on the image position information, and display the at least two live-stream displays based on a preset live-stream display layout.

10. The system according to claim 9, wherein,
the streamer side is specifically configured to acquire a first live-stream display in real time by using a local camera, pull a second live-stream display from a preset live server in real time, and merge the first live-stream display and the second live-stream display to obtain the live-stream merged display.

11. A live-stream display processing apparatus, comprising:
a pulling module configured to pull a live-stream merged display and image position information corresponding to the live-stream merged display from a live streaming media server; wherein, the live-stream merged display is obtained on the basis of merging of at least two live-stream displays, and the image position information is configured for identifying respective positions of the at least two live-stream displays in the live-stream merged display;
a separating module configured to separate the at least two live-stream displays from the live-stream merged display respectively, based on the image position information; and
a display module configured to display the at least two live-stream displays based on a preset live-stream display layout.

12. A live-stream display processing apparatus, comprising:
a merging module configured to merge at least two live-stream displays to obtain a live-stream merged display;
an obtaining module configured to obtain respective position information of the at least two live-stream displays on the live-stream merged display, as image position information corresponding to the live-stream merged display; and
a pushing module configured to push the live-stream merged display and the image position information corresponding to the live-stream merged display to a live streaming media server; wherein, the image position information is configured for separating the at least two live-stream displays from the live-stream merged display.

13. A computer-readable storage medium having stored thereon instructions which, when run on a terminal device, cause the terminal device to implement the method of any of claims 1 to 8.

14. A live-stream display processing device, comprising: a memory, a processor, and a computer program stored on the memory and executable on the processor, the processor implementing the method of any of claims 1 to 8 when executing the computer program.

15. A computer program product comprising a computer program which, when executed by a processor, implements the method of any of claims 1 to 8.
